Europäisches Patentamt

European Patent Office

Office européen des brevets

(11) Publication number: **0 262 970 B1**

# EUROPEAN PATENT SPECIFICATION

(45) Date of publication of patent specification: **15.07.92**  (51) Int. Cl.⁵: **B01D  53/34**

(21) Application number: **87308717.5**

(22) Date of filing: **01.10.87**

The file contains technical information submitted
after the application was filed and not included in
this specification

(54) **Composition for absorbing mercury.**

(30) Priority: **03.10.86 US 914805**

(43) Date of publication of application:
**06.04.88 Bulletin  88/14**

(45) Publication of the grant of the patent:
**15.07.92 Bulletin  92/29**

(84) Designated Contracting States:
**AT BE CH DE ES FR GB GR IT LI LU NL SE**

(56) References cited:
**GB-A- 2 122 916
GB-A- 2 134 093**

(73) Proprietor: **EPS ENVIRONMENTAL PROTEC-
TION SYSTEMS LIMITED
3220 Park Place 666 Burrard Street
Vancouver British Columbia V6C 2X8(CA)**

(72) Inventor: **Roydhouse, Richard H.
4917 College Highroad
Vancouver British Columbia, V6T 1G7(CA)**

(74) Representative: **Pendlebury, Anthony et al
PAGE, WHITE & FARRER 54 Doughty Street
London WC1N 2LS(GB)**

Rank Xerox (UK) Business Services

**Description**

The invention relates to a composition able to absorb mercury vapour and to suppress formation of the vapour and to a method of absorbing and suppressing mercury vapour using the composition.

Liquid mercury is used in industry, hospitals, laboratories and dental offices. Mercury is a substance of considerable toxicity and emission of mercury vapour may occur from accidental spilling or volatilization. During the process of amalgamation or other operations with mercury-rich substances, mercury liquid or mercury-rich materials will release mercury vapour at room temperature and high concentrations can occur. Inhalation of low levels of mercury vapour over years can produce symptoms of brain and neural disorders. The adverse affects of mercury are demonstrated by the extreme symptoms of brain disorder and body malfunction in people eating fish caught in waters polluted by mercury. The worst instances appear to have been in Japan but there have also been reports of cases in Northern Ontario and Quebec. Recent reports also show that dentists over age 50 have neurological symptoms, and female dentists and dental assistants may have obstetric problems due to their exposure to mercury and its vapours. The perinatal and neonatal effects of the mother's exposure to mercury vapour are a major concern.

At present two of the most important means of cleaning up mercury spills include powdered sulphur and iodine impregnated on charcoal. However both of these materials have the disadvantages that they require considerable time (days rather than hours) to react with the mercury. It is also necessary to maintain contact of the powder and the mercury indefinitely and, of course, there is the general messiness of both sulphur and charcoal, which are either fine powders or can easily form fine powders. Since charcoal is also black a mercury spill on colored carpets in dental offices for example, cannot easily be cleaned up by spreading charcoal and maintaining a charcoal layer in contact with the spilled mercury.

In the prior art copper iodide has been described as a mercury contamination indicator in US-A-969,020 to Seidenberger. Zhang in the journal Huanjing Kexue of the People's Republic of China, Volume 1, issue 1, pages 29-34 (1980), describes a method for recovering mercury dissolved in dilute salt solutions using silver thiosulphate-treated activated carbon. But the use of silver in a mercury removal device is prohibitively expensive.

Irkhin et al. in SU-A-688,440 describe the use of alkaline sodium thiosulphate for the removal of dissolved mercury from the effluent of plants manufacturing organic chemicals. RO-A-63,241 to Zeana et al. describes the use of sodium thiosulphate in calcium chloride-containing Solvay process wastes.

US-A-4,094,777 to Sugier describes a process for removing mercury from a gas or liquid by absorption on a solid mass that contains copper sulphides. Kurikami, in US-A-3,875,287, describes a method of removing mercury from highly concentrated sulphuric acid by adding iodides to precipitate the mercury as mercuric iodide.

GB-A-2134093 and corresponding CA-A-1,203,525 and US-A-4,534,944 describe a composition to absorb mercury vapour and to suppress mercury vapour. The composition comprises a polyhydric alcohol as a carrier liquid, copper ions and thiosulphate ions.

However compositions containing thiosulphate have three major drawbacks:

1. Slow release of sulphur dioxide during prolonged storage.

2. Wasted reagents as the composition is a suspension, not a solution.

3. Colour change to black in some cases during prolonged storage indicating formula decomposition.

In addition mercury vapour is not completely absorbed by many of these compositions in 15 minutes to 1 day. As rapid an absorption as possible is desirable.

The present invention provides compositions that do not suffer from the above disadvantages of thiosulphate-containing formulations and are rapid in their mercury vapour absorption.

Accordingly the present invention provides a composition for absorbing mercury vapour and for suppressing mercury vapour, the composition comprising:-

(a) an iodide; and

(b) a polyhydric alcohol, characterised in that the composition is free of thiosulphate and further comprises a Lewis acid.

The iodide may be selected from ammonium iodide, an alkaline metal iodide, ethylenediamine dihydriodide and cuprous iodide.

The polyhydric alcohol may, for example, be selected from propylene glycol, glycerol and dipropylene glycol. Generally speaking the polyhydric alcohol would be selected for its low toxicity and ability to dissolve iodine.

Preferred Lewis acids are those selected from ammonium chloride, ferric chloride, aluminium chloride, stannous chloride, zinc bromide and ferric sulphate. Certain of the iodides in the composition may also act as Lewis acids, for example ammonium iodide, copper iodide and ethylenediamine dihydriodide but not neutral iodides, such as potassium iodide. In general it is sufficient if the Lewis acid reduces the pH of the composition below that of distilled water, that is below about 5.78.

The iodide may be formed in situ by reacting hydrogen iodide with a basic compound containing the desired cation eg. cuprous carbonate to form cuprous iodide.

In a further aspect the present invention provides a method of absorbing mercury comprising applying to the source of the mercury a composition in accordance with the invention.

The invention is further illustrated in the following Examples which show the performance of various combinations of ingredients to effect the cleanup and vapour suppression of mercury.

Example:

1. 2ml of each test liquid was used to coat the bottom inside surface of a 50ml Erlenmeyer flask.
2. Approximately 0.2g (1 drop) liquid mercury was dropped into the test liquid. The test liquid meniscus was just sufficient to coat the mercury droplet.
3. The mercury vapour level 1-2 cm above the test liquid surface was measured using a Perkin Elmer Coleman Mercury Analyzer System (i.e. cold vapour atomic absorption).
4. Mercury vapour levels above the test liquid were measured at various time intervals and were expressed in micrograms mercury per cubic metre of air within the flask.

The results achieved are set out in Table 1.

Table 1
Efficiency of Mercury Absorbing Mixtures
Mercury Absorber's Composition by Weight

| Mercury Absorber # | Water | Sodium Thiosulphate | Polyol* | Iodide Salt** | Lewis Acid | Other Components | Solution or Suspension | Mercury Vapor Levels in µg/m³ above Mercury Absorber at Various Times | | | | |
|---|---|---|---|---|---|---|---|---|---|---|---|---|
| | | | | | | | | 0 min | 15 min | 30 min | 1 hr | 1 day |
| 1 | 51.26 | 1.84 | PG-40 | KI-1.91 | 0 | $CuSO_4 \cdot 5H_2O$ – 2.57 | Suspension | 33 | 23 | 128 | ### | 371 |
| 2 | 0 | 0 | PG-99.9 | CI-0.10 | 0 | $CaCl_2$ – 2.42 | Suspension | 58 | 297 | 88 | ### | 2,300 |
| 3 | 0 | 0 | PG-95.0 | 0 | 0 | | Suspension | 30 | 41 | 67 | | NM |
| 4 | 0 | 0 | PG-98.5 | ED-1.50 | 0 | | Solution | 26 | 0 | 0 | 1 | 0 |
| 5 | 0 | 0 | PG-99.58 | ED-0.16 | $NH_4Cl$-5.00 | | Solution | 8 | 0 | 1 | 0 | 0 |
| 6 | 0 | 0 | PG-93.18 | ED-1.82 | 0 | $CuSO_4 \cdot 5H_2O$ – .26 | Suspension | 27 | 14 | 19 | 15 | 71 |
| 7 | 0 | 0 | PG-95.00 | AI-5.00 | $NH_4Cl$-5.00 | 0 | Solution | 26 | 25 | 14 | 13 | 7 |
| 8 | 0 | 0 | PG-93.39 | ED-1.50 | 0 | $CuSO_4 \cdot 5H_2O$ – 0.01 | Solution | 24 | 0 | 0 | | 0 |
| 9 | 0 | 0 | PG-93.18 | ED-1.82 | $FeCl_3$-5.00 | 0 | Solution | 9 | 0 | 0 | 0 | ● |
| 10 | 0 | 0 | PG-93.18 | ED-1.82 | $SnCl_2$-5.00 | 0 | Solution | 19 | 4 | 0 | 0 | ● |
| 11 | 0 | 0 | PG-93.18 | ED-1.82 | $AlCl_3$-5.00 | 0 | Solution | 26 | 0 | 0 | 0 | ● |
| 12 | 0 | 0 | PG-93.08 | ED-0.82 | $ZnBr_2$-5.00 | 0 | Suspension | 16 | 0 | 0 | 0 | ● |
| 13 | 0 | 0 | PG-96.0 | ED-2.00 | $FeCl_3$-2.00 | 0 | Solution | 3 | 0 | 0 | 0 | ● |
| 14 | 0 | 0 | DPG-97.7 | AI-2.00 | $FeCl_3$-0.10 | 0 | Solution | 24 | 0 | 0 | 0 | ● |
| 15 | 0 | 0 | DPG-97.9 | KI-2.00 | $AlCl_3$-0.10 | 0 | Solution | 23 | 0 | 0 | 0 | ● |
| 16 | 0 | 0 | DPG-97.9 | AI-2.00 | $AlCl_3$-0.10 | 0 | Solution | 25 | 0 | 0 | 0 | ● |
| 17 | 98.5 | 0 | 0 | KI-1.50 | 0 | 0 | Solution | 71 | 2000 | 0 | 71 | 71 |
| 18 | 49.25 | 0 | PG-49.25 | KI-1.50 | 0 | 0 | Solution | 22 | 0 | 0 | 10 | 7 |
| 19 | 98.5 | 0 | 0 | ED-1.50 | 0 | 0 | Solution | 19 | 900 | 26 | | 1900 |
| 20 | 49.25 | 0 | PG-49.25 | ED-2.00 | 0 | 0 | Solution | 27 | 0 | 0 | | 0 |
| 21 | 0 | 0 | DPG-97.9 | ED-2.00 | $Fe_2(SO_4)_3$-0.10 | 0 | Suspension | 25 | 4 | 3 | 3 | ● |
| 22 | 0 | 0 | G-97.9 | AI-2.00 | $AlCl_3$-0.10 | 0 | Solution | 132 | 17 | 4 | 0 | ● |
| 23 | 5.00 | 0 | DPG-92.9 | AI-2.00 | $AlCl_3$-0.10 | 0 | Solution | 23 | 0 | 0 | 0 | ● |

* PG - propylene glycol, G - glycerol, DPG - dipropylene glycol
** KI - potassium iodide, AI - ammonium iodide, CI - copper iodide, ED - ethylenediamine dihydriodide (AJAY Chemicals Inc, Powder Springs, Florida)
*** NM - not measured

0107o

Results show that mercury absorbing solutions containing an iodide salt, a Lewis acid and a polyol are superior to solutions lacking any of these components even though some two component formulations, for example ammonium iodide and polyethylene glycol and ethylenediamine dihydriodide with polypropylene glycol, will produce satisfactory results. These two last formulations are, it should be emphasized, superior to prior art formulations containing thiosulphate ion viewed from the point of view of speed of action with mercury, ease of formulation and lack of sulphur dioxide formation.

4

It is believed that the compositions according to the present invention become active on exposure to air and light by forming free iodine, which reacts rapidly with mercury. Polyols have low vapour pressures, coat mercury well and are excellent solvents for the active reagents, including the iodine produced in situ.

The Lewis acid is believed to stimulate the dissociation of the iodide to free iodine in the presence of ambient air.

As indicated above large numbers of polyols are appropriate but, in general, the compounds that will be used are those having least toxicity. The information concerning the solubility of the iodides in the polyhydric alcohol and of iodine in polyhydric alcohols can be found in Solubilities of Inorganic and Metal Organic Compounds by Seidell, revised by Linke, 4th edition, volume 1, 1958 published by the American Chemical Society, pages 1267 and 1268.

**Claims**

1. A composition for absorbing mercury vapour and for suppressing mercury vapour, the composition comprising:-
   (a) an iodide; and
   (b) a polyhydric alcohol, characterised in that the composition is free of thiosulphate and further comprises a Lewis acid.

2. A composition as claimed in claim 1, in which the iodide is selected from ammonium iodide, an alkali metal iodide, ethylenediamine dihydriodide and cuprous iodide.

3. A composition as claimed in claim 1 or 2, in which the polyhydric alcohol is selected from propylene glycol, glycerol and dipropylene glycol.

4. A composition as claimed in any one of the preceding claims, in which the Lewis acid is selected from ammonium chloride, ferric chloride, aluminium chloride, stannous chloride, zinc bromide and ferric sulphate.

5. A composition as claimed in any one of the preceding claims, in which the iodide is formed in situ by reacting hydrogen iodide with a basic compound containing the desired cation.

6. A method of absorbing mercury comprising applying to the source of the mercury a composition as claimed in any one of the preceding claims.

**Revendications**

1. Composition pour absorber de la vapeur de mercure et pour supprimer de la vapeur de mercure, comprenant:
   a) un iodure ; et
   b) un alcool polyvalent, caractérisé en ce que la composition est exempte de thiosulphate et comprend en outre un acide de Lewis.

2. Composition selon la revendication 1, dans laquelle l'iodure est sélectionné parmi l'iodure d'ammonium, un iodure de métal alcalin, l'iodure dihydrique d'éthylène-diamine et l'iodure cuivreux.

3. Composition selon la revendication 1 ou 2, dans lequel l'alcool polyvalent est sélectionné parmi le propylène glyool, le glycérol et le dipropylène glycol.

4. Composition selon l'une quelconque des revendications précédentes, dans lequel l'acide de Lewis est sélectionné parmi le chlorure d'ammonium, le chlorure ferrique, le chlorure d'aluminium, le chlorure d'étain, le bromure de zinc et le sulfate ferrique.

5. Composition selon l'une quelconque des revendications précédentes, dans laquelle l'iodure est formé in situ en faisant réagir de l'iodure d'hydrogène avec un complexe alcalin comprenant le cation désiré.

6. Procédé d'absorption de mercure comprenant l'application à la source du mercure une composition selon l'une quelconque des revendications précédentes.

**Patentansprüche**

1. Zusammensetzung zum Absorbieren von Quecksilberdampf und zum Unterdrücken von Quecksilberdampf, welche besteht aus:
   (a) einem Jodid; und
   (b) einem mehrere Hydroxylgruppen enthaltenden Alkohol, dadurch gekennzeichnet, daß die Zusammensetzung frei von Thiosulfat ist und eine Lewis-Säure enthält.

2. Zusammensetzung nach Anspruch 1, in der das Jodid ausgewählt ist aus Ammoniumjodid, einem Alkalimetall-Jodid, Äthylendiamindihydrojodid und Kupfer(I)-jodid.

3. Zusammensetzung nach Anspruch 1 oder 2, in der der mehrere Hydroxylgruppen enthaltende Alkohol ausgewählt ist aus Propylenglykol, Glyzerin und Dipropylenglykol.

4. Zusammensetzung nach einem der vorangehenden Ansprüche, in der die Lewis-Säure ausgewählt ist aus Ammoniumchlorid, Eisen(III)-chlorid, Aluminiumchlorid, Zinn(II)-chlorid, Zinkbromid und Eisen(III)-sulfat.

5. Zusammensetzung nach einem der vorangehenden Ansprüche, in der das Jodid durch Reagieren von Jodwasserstoff mit einer das gewünschte Kation enthaltenden basischen Verbindung in situ erzeugt ist.

6. Verfahren zum Absorbieren von Quecksilber, bei welchem auf die Quecksilberquelle eine Zusammensetzung nach einem der vorangehenden Ansprüche angewendet wird.